# EUROPÄISCHE PATENTSCHRIFT

(11) **EP 3 405 601 B1**
(45) Veröffentlichungstag und Bekanntmachung des Hinweises auf die Patenterteilung: **29.07.2020**
(21) Anmeldenummer: 17702534.3
(22) Anmeldetag: 17.01.2017
(51) Int. Cl.: C23F 11/10, C09K 5/20, C23F 11/08

(54) **KORROSIONSSCHUTZMITTEL**
ANTI-CORROSION AGENT
PRODUIT DE PROTECTION ANTICORROSION

(30) Priorität: 19.01.2016 DE 202016000330 U
(43) Veröffentlichungstag der Anmeldung: 28.11.2018
(73) Patentinhaber: Aqua-Concept Gesellschaft für Wasserbehandlung mbH, 82166 Gräfelfing (DE)
(72) Erfinder: PORADA, Thomas, 81377 München (DE)
(74) Vertreter: Hoefer & Partner Patentanwälte mbB
(86) Internationale Anmeldenummer: PCT/EP2017/050899
(87) Internationale Veröffentlichungsnummer: WO 2017/125391

(56) Entgegenhaltungen:
- EP-A1- 0 739 965
- CN-B- 102 453 469
- DE-A1- 19 955 704
- US-A- 4 869 841

## Beschreibung

Die Erfindung betrifft ein Korrosionsschutzmittel mit integriertem Frostschutz sowie eine Fertigmischung eines Antikorrosionsmittels.

Aus dem Stand der Technik sind Korrosionsschutzmittel für unterschiedliche Metalle, insbesondere für metallische, wasserführende Leitungen, bekannt. Diese basieren oftmals auf einer Mischung von Mono- und Diethylenglykolen und Benzotriazol. Die antikorrosive Wirkung wird dabei durch hohe Konzentrationen an Benzotriazol erzeugt. Benzotriazol ist zwar ein wirksames Korrosionsschutzmittel, jedoch ist es stark umweltbelastend und in der Wassergefährdungsklasse 1 eingestuft.

Es ist Aufgabe der Erfindung ein wirksames, aber umweltfreundlicheres bzw. die Umwelt weniger schädigendes Korrosionsschutzmittel mit integriertem Frostschutz bereitzustellen Die Lösung dieser Aufgabe erfolgt durch den Gegenstand der Ansprüche 1 und 9.

Erfindungsgemäß wird ein Korrosionsschutzmittel gemäß Anspruch 1 bereitgestellt. Die erste Dicarbonsäure und die zweite Dicarbonsäure sind mit jeweils 0,26 bis 0,70 Gew.-%, bezogen auf das Gesamtgewicht des Korrosionsschutzmittels, im Korrosionsschutzmittel enthalten und aus der Gruppe bestehend aus Oxalsäure, Malonsäure, Bernsteinsäure, Glutarsäure und Adipinsäure ausgewählt. Als weitere Säure ist mindestens eine aromatisch Carbonsäure mit einem Phenylrest und mindestens einer Carboxylgruppe enthalten. Die Carboxylgruppe ist somit Substituent eines Benzylrings. Die Konzentration der aromatischen Carbonsäure beträgt, bezogen auf das Gesamtgewicht des Korrosionsschutzmittels, ebenfalls 0,26 bis 0,70 Gew.-%. Zur Verbesserung des Korrosionsschutzes sowie des Frostschutzes des erfindungsgemäßen Korrosionsschutzmittels enthält dieses, bezogen auf das Gesamtgewicht des Korrosionsschutzmittels ferner 0,02 bis 0,50 Gew.-% mindestens eines Diazols und/oder eines Triazols. Die überwiegende Frostschutzwirkung beruht auf dem Zusatz von mindestens einem Alkohol. Der Alkohol ist erfindungsgemäß ausgewählt aus der Gruppe bestehend aus: Monoethylenglykol, Monopropylenglykol, Dipropylenglykol, Triethylenglykol, 1,3-Propandiol (Propan-1,3-diol) und Ethanol. Diese Alkohole haben sich in Kombination mit den enthaltenen Säuren als effektive Frostschutzmittel erwiesen und zeigen eine bedeutend bessere Wirkung als handelsübliche Mischungen mit Glycerin. Der Alkohol oder auch Mischungen daraus, kann/können als so genannter Ausgleichsstoff zum Auffüllen des Korrosionsschutzmittels auf 100 Gew.-% verwendet werden. Auf diese Weise kann das Korrosionsschutzmittel in Form eines Konzentrats eingesetzt werden. Der mindestens eine Alkohol kann aber auch partiell durch Wasser substituiert werden, jedoch werden, sofern das Korrosionsschutzmittel als Konzentrat eingesetzt wird, insbesondere nicht mehr als etwa 2 Gew.-% des oder der Alkohole durch Wasser substituiert. Zur Passivierung der vor Korrosion zu schützenden Metalle enthält das erfindungsgemäße Korrosionsschutzmittel zudem mindestens eine Base mit 1,60 bis 4,20 Gew.-%, bezogen auf das Gesamtgewicht des Korrosionsschutzmittels. Die Base kann in den angegebenen Mengen eingesetzt werden, um den pH-Wert des Korrosionsschutzmittels auf einen bevorzugten Bereich von 7,5 bis 9,5 einzustellen. Das erfindungsgemäße Korrosionsschutzmittel kann weitere funktionale Additive enthalten, beispielsweise Verdickungsmittel, Stabilisatoren, Tenside, Dispergiermittel und dergleichen. Der Gehalt dieser funktionalen Additive liegt jedoch insbesondere unter 1 Gew.-%, bezogen auf das Gesamtgewicht des Korrosionsschutzmittels. Durch die erfindungsgemäße Kombination an funktionalen Wirkstoffen wird ein hoch effektives Korrosionsschutzmittel mit integriertem Forstschutz bereitgestellt, das durch die synergistische Wirkung der eingesetzten Säuren mit einem sehr geringen Gehalt an Diazol(en) und/oder Triazol(en) auskommt, so dass bei sehr gutem Korrosionsschutz die Umwelt lediglich in äußerst geringem Umfang belastet wird. Das erfindungsgemäße Korrosionsschutzmittel ist damit als umweltfreundlich anzusehen.

Die Unteransprüche beinhalten vorteilhafte Weiterbildungen und Ausgestaltungen der Erfindung.

Eine vorteilhafte Weiterbildung des erfindungsgemäßen Korrosionsschutzmittels ist dadurch gekennzeichnet, dass die Base ausgewählt ist aus Alkanolaminen, Natronlauge und/oder Kalilauge. Unter Natronlauge und Kalilauge werden wässrige Lösungen von NaOH und KOH verstanden, die in gewünschter Konzentration eingesetzt werden. Für die Verarbeitung sind wässrige NaOH- oder KOH-Lösungen mit Konzentrationen zwischen 40 und 50 Gew.-% besonders gut geeignet. Alkanolamine haben gegenüber Natronlauge und Kalilauge den Vorteil, dass diese deutlicher pH-Wert stabilisierend sind.

Besonders gut geeignet sind Mischungen aus Natronlauge, Kalilauge und Alkanolaminen, da somit deren jeweilige Vorteile zur Geltung kommen. Eine weitere vorteilhafte Weiterbildung sieht demnach vor, dass die Base 0,55 bis 1,45 Gew.-% 85 %-ige wässrige Triethanolaminlösung, 0,25 bis 0,75 Gew.-% 50%-ige wässrige Natronlauge und 0,80 bis 2,00 Gew.-% 45%-ige wässrige Kalilauge enthält. Die Verwendung von Triethanolamin in Kombination mit Natronlauge und Kalilauge hat sich auch im Hinblick auf eine Stabilisierung der Diazole und Triazole als vorteilhaft herausgestellt. Eine Ausflockung der Diazole und Triazole kann durch Verwendung von Triethanolamin verringert oder sogar verhindert werden.

Als besonders gute Korrosionsschutzverbindungen haben sich die Dicarbonsäuren Oxalsäure, Malonsäure, Bernsteinsäure, Glutarsäure und Adipinsäure herausgestellt. Besonders vorteilhaft sind damit die erste und die zweite Dicarbonsäure ausgewählt aus der Gruppe bestehend aus: Oxalsäure, Malonsäure, Bernsteinsäure, Glutarsäure und Adipinsäure.

Aufgrund ihres synergistischen Zusammenwirkens sind Kombinationen von Adipinsäure und Bernsteinsäure besonders bevorzugt. Eine weitere vorteilhafte Weiterbildung des erfindungsgemäßen Korrosionsschutzmittels ist damit dadurch gekennzeichnet, dass die erste Dicarbonsäure Adipinsäure und die zweite Dicarbonsäure Bernsteinsäure ist.

Aufgrund ihrer guten Verfügbarkeit und sehr guten Verarbeitbarkeit in wässrigen und alkoholischen Lösungen wird als aromatische Carbonsäure vorteilhaft Benzoesäure eingesetzt.

Weiter vorteilhaft ist das Diazol oder Triazol ausgewählt aus Benzotriazol, Tolyltriazol, Imidazol und mit aliphatischen Kohlenstoffresten substituierten Triazolen. Als besonders effektiv im Hinblick auf die Korrosionsschutzwirkung hat sich Benzotriazol herausgestellt. Benzoltriazol kann durch die bereits durch die Säuren induzierte Korrosionsschutzwirkung mit lediglich einer sehr geringen Konzentration eingesetzt werden. Dies ist der Umweltverträglichkeit des erfindungsgemäßen Korrosionsschutzmittels zuträglich.

Wie bereits vorstehend dargelegt, kann das erfindungsgemäße Korrosionsschutzmittel weitere funktionale Additive enthalten. Zur Visualisierung des Korrosionsschutzmittels kann vorteilhaft mindestens eine farbgebende Substanz enthalten sein. Farbgebende Substanzen im Sinne der vorliegenden Erfindung umfassen sowohl Pigmente als auch lösliche Farbstoffe. Aus Umweltschutzgründen und Gründen der Umweltverträglichkeit kommen insbesondere Lebensmittelfarbstoffe zur Anwendung. Hierunter haben sich insbesondere Food Yellow 1, Food Yellow 2, Food Yellow 3 und Food Yellow 4 als vorteilhaft herausgestellt, da diese Farbstoffe bereits bei sehr niedrigen Einsatzkonzentrationen, beispielsweise von weniger als 0,01 bis 0,02 Gew.-%, bezogen auf das Gesamtgewicht des Korrosionsschutzmittels, eine gute Farbgebung ergeben.

Ein weiteres bevorzugtes funktionales Additiv ist ein Homo-, Co- und/oder Terpolymer teilneutralisierter Polycarboxylate. Es kann als Dispergierhilfsmittel und als die Frostschutzwirkung verbesserndes Additiv eingesetzt werden. Vorteilhafte Konzentrationen sind 0,02 bis 0,06 Gew.-%, bezogen auf das Gesamtgewicht des erfindungsgemäßen Korrosionsschutzmittels. Ein beispielhaft sehr gut wirksames Polycarboxylat ist Acumer® 3100, das von der Firma Rohm & Haas vertrieben wird.

Ferner erfindungsgemäß wird auch eine Fertigmischung eines Antikorrosionsmittels beschrieben, die ein wie vorstehend beschriebenes Korrosionsschutzmittel und Wasser enthält. Zur Herstellung der erfindungsgemäßen Fertigmischung eines Antikorrosionsmittels wird das vorstehend als Konzentrat wirkende Korrosionsschutzmittel mit einer gewünschten Menge an Wasser verdünnt. Das hierzu verwendete Wasser ist insbesondere vollentsalztes Wasser, so genanntes VE-Wasser. Besonders vorteilhafte Mischungsverhältnisse an Korrosionsschutzmittel und Wasser liegen in Gewichtsprozent in einem Bereich von 20:80 bis 40:60. Eine sehr gute Korrosionsschutzwirkung mit Frostschutz wird insbesondere bei einem Mischungsverhältnis von 25 Gew.-% Korrosionsschutzmittel und 75 Gew.-% Wasser erzielt. Sofern erforderlich kann der pH-Wert durch entsprechende Dosierung der Base in einen gewünschten Bereich gebracht werden.

### Beispiele

Im Folgenden werden zwei Beispiele offenbart, die die vorliegende Erfindung veranschaulichen, diese jedoch nicht darauf beschränken sollen:

### Beispiel 1: Korrosionsschutzmittel

| Rohstoff | eingesetzte Menge in Gew.-% |
|---|---|
| VE-Wasser | 1,710 |
| 1,3-Propandiol | 92,000 |
| 85%-ige wässrige Triethanolaminlösung | 1,440 |
| 50%-ige wässrige Natronlauge | 0,743 |
| 45%ige wässrige Kalilauge | 2,000 |
| Acumer® 3100 | 0,060 |
| Bernsteinsäure | 0,660 |
| Adipinsäure | 0,660 |
| Benzoesäure | 0,660 |
| Benzotriazol | 0,060 |
| Yellow 4 (CI 19140) | 0,007 |

Zur Herstellung des Korrosionsschutzmittels wurden das Wasser und das 1,3-Propandiol vermischt und anschließend die Basen zugegeben. Daraufhin wurden die Säuren sowie das Benzotriazol und abschließend das Acumer® 3100 sowie das Yellow 4 zugefügt. Die Mischung wurde solange bei ca. 30-50 °C gerührt, bis alle Substanzen homogen vermengt waren. Der pH-Wert des Korrosionsschutzmittels betrug 8,6.

Das Korrosionsschutzmittel zeigte einen guten Frostschutz bis ca. -10 °C und eine gute Korrosionsschutzwirkung gegenüber den meisten metallischen Werkstoffen.

### Beispiel 2: Fertigmischung eines Antikorrosionsmittels

| Rohstoff | eingesetzte Menge in Gew.-% |
|---|---|
| VE-Wasser | 75,427 |
| 1,3-Propandiol | 23,000 |
| 85%-ige wässrige Triethanolaminlösung | 0,360 |
| 50%-ige wässrige Natronlauge | 0,186 |
| 45%ige wässrige Kalilauge | 0,500 |
| Acumer® 3100 | 0,015 |
| Bernsteinsäure | 0,165 |
| Adipinsäure | 0,165 |
| Benzoesäure | 0,165 |
| Benzotriazol | 0,015 |
| Yellow 4 (CI 19140) | 0,002 |

Zur Herstellung der Fertigmischung eines Antikorrosionsmittels wurden 25 Gew.-% des Korrosionsschutzmittels aus Beispiel 1 mit 75 Gew.-% VE-Wasser verdünnt.

Die Fertigmischung wurde gemäß ASTM D-1384-12 in einer modifizierten Ausführung (Fertigmischung ohne weitere Verdünnung) mit folgendem Ergebnis durchgeführt:
Die verwendeten Materialien entsprechen wie folgt obiger Norm:
   1. Aluminium: 0,4 g/m²
   2. Kupfer. 2,0 g/m²
   3. Messing: 1,6 g/m²
   4. Grauguss: 2,9 g/m²
   5. Stahl: 0,6 g/m².

## Patentansprüche

1. Korrosionsschutzmittel enthaltend:
- 1,60 bis 4,20 Gew.-% mindestens einer Base,
- 0,26 bis 0,70 Gew.-% mindestens einer ersten Dicarbonsäure mit zwei bis sechs Kohlenstoffatomen,
- 0,26 bis 0,70 Gew.-% mindestens einer zweiten Dicarbonsäure mit zwei bis sechs Kohlenstoffatomen,
- 0,26 bis 0,70 Gew.-% mindestens einer aromatischen Carbonsäure mit einem Phenylrest und mindestens einer Carboxylgruppe,
- 0,02 bis 0,50 Gew.-% mindestens eines Diazols und/oder eines Triazols und
- mindestens einen Alkohol, ausgewählt aus der Gruppe bestehend aus:
Monoethylenglykol, Monopropylenglykol, Dipropylenglykol, Triethylenglykol, 1,3-Propandiol und Ethanol
**dadurch gekennzeichnet, dass** die erste und die zweite Dicarbonsäure ausgewählt sind aus der Gruppe bestehend aus: Oxalsäure, Malonsäure, Bernsteinsäure, Glutarsäure und Adipinsäure.

2. Korrosionsschutzmittel nach Anspruch 1, **dadurch gekennzeichnet, dass** die Base ausgewählt ist aus Alkanolaminen, Natronlauge und/oder Kalilauge.

3. Korrosionsschutzmittel nach Anspruch 1 oder 2, **dadurch gekennzeichnet, dass** die Base 0,55 bis 1,45 Gew.-% 85%-ige wässrige Triethanolaminlösung, 0,25 bis 0,75 Gew.-% 50%-ige wässrige Natronlauge und 0,80 bis 2,00 Gew.-% 45%-ige wässrige Kalilauge enthält.

4. Korrosionsschutzmittel nach einem der vorhergehenden Ansprüche, **dadurch gekennzeichnet, dass** die erste Dicarbonsäure Adipinsäure und die zweite Dicarbonsäure Bernsteinsäure ist.

5. Korrosionsschutzmittel nach einem der vorhergehenden Ansprüche, **dadurch gekennzeichnet, dass** die aromatische Carbonsäure Benzoesäure ist.

6. Korrosionsschutzmittel nach einem der vorhergehenden Ansprüche, **dadurch gekennzeichnet, dass** das Diazol oder Triazol ausgewählt ist aus Benzotriazol, Tolyltriazol, Imidazol und mit aliphatischen Kohlenstoffresten substituierten Triazolen.

7. Korrosionsschutzmittel nach einem der vorhergehenden Ansprüche, ferner enthaltend mindestens eine farbgebende Substanz, insbesondere mindestens einen Lebensmittelfarbstoff und insbesondere Food Yellow 1, Food Yellow 2, Food Yellow 3 oder Food Yellow 4.

8. Korrosionsschutzmittel nach einem der vorhergehenden Ansprüche, ferner enthaltend 0,02 bis 0,06 Gew.-% mindestens eines Homo-, Co- und/oder Terpolymers teilneutralisierter Polycarboxylate.

9. Fertigmischung eines Antikorrosionsmittels enthaltend ein Korrosionsschutzmittel nach einem der Ansprüche 1 bis 8 und Wasser.

## Claims

1. Anticorrosive composition comprising:
- 1.60% to 4.20% by weight of at least one base,
- 0.26% to 0.70% by weight of at least one first dicarboxylic acid having two to six carbon atoms,
- 0.26% to 0.70% by weight of at least one second dicarboxylic acid having two to six carbon atoms,
- 0.26% to 0.70% by weight of at least one aromatic carboxylic acid having one phenyl radical and at least one carboxyl group,
- 0.02% to 0.50% by weight of at least one diazole and/or one triazole and
- at least one alcohol selected from the group consisting of: monoethylene glycol, monopropylene glycol, dipropylene glycol, triethylene glycol, propane-1,3-diol and ethanol,
**characterized in that** the first and second dicarboxylic acids are selected from the group consisting of: oxalic acid, malonic acid, succinic acid, glutaric acid and adipic acid.

2. Anticorrosive composition according to Claim 1, **characterized in that** the base is selected from alkanolamines, sodium hydroxide solution and potassium hydroxide solution.

3. Anticorrosive composition according to Claim 1 or 2, **characterized in that** the base contains 0.55% to 1.45% by weight of 85% aqueous triethanolamine solution, 0.25% to 0.75% by weight of 50% aqueous potassium hydroxide solution and 0.80% to 2.00% by weight of 45% aqueous potassium hydroxide solution.

4. Anticorrosive composition according to any of the preceding claims, **characterized in that** the first dicarboxylic acid is adipic acid and the second dicarboxylic acid is succinic acid.

5. Anticorrosive composition according to any of the preceding claims, **characterized in that** the aromatic carboxylic acid is benzoic acid.

6. Anticorrosive composition according to any of the preceding claims, **characterized in that** the diazole or triazole is selected from benzotriazole, tolyltriazole, imidazole, and triazoles substituted by aliphatic carbon residues.

7. Anticorrosive composition according to any of the preceding claims, further comprising at least one colouring substance, especially at least one food dye and especially Food Yellow 1, Food Yellow 2, Food Yellow 3 or Food Yellow 4.

8. Anticorrosive composition according to any of the preceding claims, further comprising 0.02% to 0.06% by weight of at least one homo-, co- and/or terpolymer of partly neutralized polycarboxylates.

9. Ready-made anticorrosive mixture comprising an anticorrosive composition according to any of Claims 1 to 8 and water.

## Revendications

1. Produit de protection anticorrosion contenant :
- 1,60 à 4,20 % en poids d'au moins une base,
- 0,26 à 0,70 % en poids d'au moins un premier acide dicarboxylique avec deux à six atomes de carbone,
- 0,26 à 0,70 % en poids d'au moins un second acide dicarboxylique avec deux à six atomes de carbone,
- 0,26 à 0,70 % en poids d'au moins un acide carboxylique aromatique avec un reste de phényle et au moins un groupe carboxylique,
- 0,02 à 0,50 % en poids d'au moins un diazole et/ou d'un triazole et
- au moins un alcool, sélectionné à partir du groupe constitué de :
monoéthylèneglycol, monopropylèneglycol, dipropylèneglycol, triéthylèneglycole, 1,3-propandiol et d'éthanol,
**caractérisé en ce que** le premier et le second acide dicarboxylique sont sélectionnés à partir du groupe constitué : d'acide oxalique, d'acide malonique, d'acide succinique, d'acide glutarique et d'acide adipique.

2. Produit de protection anticorrosion selon la revendication 1, **caractérisé en ce que** la base est sélectionnée à partir d'alcanolaminines, de soude caustique et/ou de potasse.

3. Produit de protection anticorrosion selon la revendication 1 ou 2, **caractérisé en ce que** la base contient 0,55 à 1,45 % en poids de solution de triéthanolamine aqueuse à 85 %, 0,25 à 0,75 % en poids de soude caustique aqueuse à 50 % et 0,80 à 2,00 % en poids de potasse aqueuse à 45 %.

4. Produit de protection anticorrosion selon l'une des revendications précédentes, **caractérisé en ce que** le premier acide dicarboxylique est de l'acide adipique et le second acide dicarboxylique est de l'acide succinique.

5. Produit de protection anticorrosion selon l'une des revendications précédentes, **caractérisé en ce que** l'acide carboxylique aromatique est de l'acide benzoïque.

6. Produit de protection anticorrosion selon l'une des revendications précédentes, **caractérisé en ce que** le diazole ou le triazole est sélectionné à partir du benzotriazole, du tolyltriazole, de l'imidazole et de triazoles substitués par des restes de carbone aliphatiques.

7. Produit de protection anticorrosion selon l'une des revendications précédentes, contenant en outre au moins une substance colorante, en particulier au moins un colorant alimentaire et en particulier Food Yellow 1, Food Yellow 2, Food Yellow 3 ou Food Yellow 4.

8. Produit de protection anticorrosion selon l'une des revendications précédentes, contenant en outre 0,02 à 0,06 % en poids d'au moins un homopolymère, copolymère et/ou terpolymère de polycarboxylate partiellement neutralisé.

9. Mélange fini d'un moyen anticorrosion contenant un produit de protection anticorrosion selon l'une des revendications 1 à 8 et de l'eau.
